# EUROPÄISCHE PATENTSCHRIFT

(11) **EP 4 254 097 B1**
(45) Veröffentlichungstag und Bekanntmachung des Hinweises auf die Patenterteilung: **28.05.2025**
(21) Anmeldenummer: 22165098.9
(22) Anmeldetag: 29.03.2022
(51) Int. Cl.: G05B 19/4068, G05B 19/042, G05B 19/4155, G05B 19/418

(54) **INDUSTRIEANLAGE UND VERFAHREN ZUR GRAFISCHEN DARSTELLUNG VON GLEICHLAUFBEZIEHUNGEN**
INDUSTRIAL PLANT AND METHOD FOR GRAPHICAL REPRESENTATION OF SYNCHRONISM
INSTALLATION INDUSTRIELLE ET PROCÉDÉ DE REPRÉSENTATION GRAPHIQUE DE RELATIONS SYNCHRONES

(43) Veröffentlichungstag der Anmeldung: 04.10.2023
(73) Patentinhaber: Siemens Aktiengesellschaft, 80333 München (DE)
(72) Erfinder: Jarosz, Piotr, 09122 Chemnitz (DE); Klier, Ronny, 09114 Chemnitz (DE); Scherf, Thomas, 09244 Lichtenau (DE); Schneider, Sven, 09123 Chemnitz (DE)
(74) Vertreter: Siemens Patent Attorneys

(56) Entgegenhaltungen:
- EP-A2- 1 217 476
- EP-B1- 2 149 825
- DE-A1- 10 125 384
- US-A1- 2007 005 266

## Beschreibung

Die Erfindung betrifft eine Industrieanlage umfassend ein erstes Steuerungsgerät, in welchem ein erstes Anwenderprogramm abläuft, ein zweites Steuerungsgerät, in welchem ein zweites Anwenderprogramm abläuft, eine Mehrzahl an Antrieben, welche von den Anwenderprogrammen angesteuert oder geregelt werden, den Antrieben sind in den Anwenderprogrammen Objekte zugeordnet, wobei zwischen den Objekten Gleichlaufbeziehungen bestehen, wobei die Anwenderprogramme eine Mehrzahl unterschiedlicher Ablaufstrukturen aufweisen, welche auf die Gleichlaufbeziehungen zwischen den Objekten derart Einfluss nehmen, dass eine Gleichlaufbeziehung entweder eine aktive Gleichlaufbeziehung oder eine inaktive Gleichlaufbeziehung ist.

Auch betrifft die Erfindung ein Verfahren zur grafischen Darstellung von Gleichlaufbeziehungen zwischen einer Mehrzahl an Antrieben in einer Industrieanlage, wobei den Antrieben in einem ersten Anwenderprogramm für ein erstes Steuerungsgerät und in einem zweiten Anwenderprogramm für ein zweites Steuerungsgerät Objekte zugeordnet werden und die Objekte konfiguriert werden, die Mehrzahl an Antrieben wird von dem Anwenderprogramm angesteuert und/oder geregelt, die Anwenderprogramme werden derart ausgeführt, dass eine Mehrzahl unterschiedlicher Ablaufstrukturen auftritt, welche auf die Gleichlaufbeziehungen zwischen den Objekten derart Einfluss nehmen, dass eine Gleichlaufbeziehung entweder eine aktive Gleichlaufbeziehung oder eine inaktive Gleichlaufbeziehung ist.

Die EP 2 149 825 B1 offenbart einen Projektnavigator zur hierarchischen Darstellung von Technologieobjekten auf einer Anzeigevorrichtung, wobei die Technologieobjekte untereinander verschaltet sind und eine Maschine mit kaskadierter Gleichlaufsteuerung modelieren.

In der DE 101 25 384 A1 soll ein Engineering von Automatisierungssystemen einfacher gestaltet werden. Daher wird die Funktionalität des Steuerungssystems über ein Objektmodell realisiert.

Das Objektmodell ermöglicht das funktionelle Zusammenschalten von Technologieobjekten. Ein Projektbrowser gewährleistet hierfür die Darstellung des Zusammenspiels aller an einer Applikation beteiligten Komponenten in ihren wechselseitigen Beziehungen.

Die EP 1 217 476 A2 offenbart eine Vorrichtung und ein Verfahren zur Inbetriebnahme und zur Diagnose von Steuerungssystemen, wobei ein Steuerungsprogramm für das Steuerungssystem auf einen Objektmodel basiert und Technologieobjekte für Gleichlaufachsen aufweist.

Der Erfindung liegt die Aufgabe zugrunde, ausgehend von dem bekannten Stand der Technik, verbesserte Diagnosemöglichkeiten von verteilten Gleichläufen zu realisieren.

Für die eingangs genannte Industrieanlage wird die Aufgabe dadurch gelöst, dass eine Vorrichtung zur grafischen Darstellung von Gleichlaufbeziehungen zwischen den Objekten vorhanden ist, dazu weist die Vorrichtung ein Analysewerkzeug auf, welches ausgestaltet ist die Anwenderprogramme bezüglich der Objekte und der Gleichlaufbeziehungen zwischen den Objekten datentechnisch zu analysieren und weiterhin ausgestaltet aus den analytisch ermittelten Daten zum einen einen ersten Datensatz über die verwendeten Objekte und zum anderen einen zweiten Datensatz über einen zeitlichen Bezug über aktive und inaktive Gleichlaufbeziehungen zwischen den Objekten zu erhalten, zur grafischen Darstellung auf einen Display ist ein Aufbereitungsmittel vorhanden, welches ausgestaltet ist anhand des ermittelten ersten Datensatzes und des ermittelten zweiten Datensatzes die Objekte mit ihren aktiven oder inaktiven Gleichlaufbeziehungen grafisch darzustellen, wobei die Vorrichtung ein Aufzeichnungsmittel auf, welches ausgestaltet ist, einen ersten Lesedienst auf dem ersten Steuerungsgerät und einen zweiten Lesedienst auf dem zweiten Steuerungsgerät zu installieren, wobei die Lesedienste dazu ausgestaltet sind eine Ablaufverfolgung der Objekte im ersten Anwenderprogramm bzw. im zweiten Anwenderprogramm durchzuführen und dabei eine zeitliche Zuordnung zu Zustandsdaten, Synchronisationsdaten und Betriebsartdaten der Objekte in einer ersten Ablaufdatei bzw. einer zweiten Ablaufdatei aufzuzeichnen, weiterhin ist das Aufbereitungsmittel dazu ausgestaltet, mit Hilfe der aufgezeichneten Ablaufdateien der Steuerungsgeräte einen Verlauf der aktiven Gleichlaufbeziehung zwischen zwei Objekten, welche sich auf unterschiedlichen Steuerungsgeräten befinden, auf dem Display anzuzeigen.

Da die Auswahl der aktiven Gleichläufe während einer Maschinenlaufzeit situationsbedingt durch die Steuerungsprogramme erfolgt, ist es von Vorteil, dass die Darstellung der aktiven Gleichläufe dabei als ein Diagramm über die Zeit erfolgt. Für eine Maschineninbetriebnahme benötit ein Benutzer Informationen über die jeweils aktiven Gleichläufe. Dabei ist zu beachten, dass es aufgrund der hohen Abarbeitungsgeschwindigkeiten der Steuerungsprogramme zu häufigen Änderungen der aktiven Gleichläufe kommt, welche auch nachträglich anhand von Aufzeichnungen nachvollziehbar gemacht werden müssen.

Nun kann mit Vorteil der Verlauf der aktiven Gleichlaufbeziehung auch auf unterschiedlichen Steuerungsgeräten nachvollziehbar gemacht werden. Bei Gleichlaufbeziehungen über die Grenzen eines Steuerungsgerätes hinweg spricht man von verteilten Gleichläufen. Zu den erforderlichen Daten die für das Erfassen der verteilten Gleichläufe benötigt werden, gehören die Konfigurationsdaten der projektierten Verschaltungen und der Kommunikation zwischen den Steuerungsgeräten, die aktuellen Verschaltungszustände (z.B. inaktiv, aktiv, Synchronisation ausgewählter Verschaltungspartner) sowie aktuelle Objektzustände (z.B. in Abarbeitung, in einen Fehlerzustand). Die einzelnen technologischen Objekte können auf verschiedenen Steuerungsgeräten berechnet werden, man spricht dann von dem verteilten Gleichlauf.

Erfindungsgemäß wird in einer grafischen Darstellung das Zusammenspiel aller Technologieobjekte zu einem gewissen Zeitpunkt dargestellt. Damit ist ein Gesamtüberblick der Gleichläufe zwischen den Technologieobjekten auf der Industrieanlage auch über Steuerungsgrenzen, also verteilten Gleichläufen, möglich. Ein Anwender der Industrieanlage wird nun in die Lage versetzt, in jedem Inbetriebnahmeschritt die zu diesem Zeitpunkt herrschenden Gleichläufe visuell zu erfassen.

Die bereits aufgezeigte Diagnosemöglichkeit wird weiterhin dadurch verbessert, dass das Aufbereitungsmittel weiterhin dazu ausgestaltet ist, einen Zeitschieberegler für die Darstellung in dem Display aufzubereiten, und das der Zeitschieberegler dazu ausgestaltet ist, den Verlauf der aktiven Gleichlaufbeziehung auf dem Display für einen jeweils angewählten Zeitpunkt anzuzeigen und damit den Verlauf der aktiven Gleichlaufbeziehungen nachvollziehbar zu machen. Mit dem Zeitschieberegler kann man nun interaktiv arbeiten, er wird z.B. mit einer Maus gegriffen und in der Zeit nach rechts verschoben oder zurück in der Zeit nach links verschoben und abhängig von der Stellung des Zeitschiebereglers ändern sich die in der Ablaufstruktur zu dem angewählten Zeitpunkt gegebenen Gleichlaufbeziehungen zwischen den Technologieobjekten bzw. zwischen den Objekten.

Weiter verfeinert wird die Diagnosemöglichkeit, wenn das Analysewerkzeug dazu ausgestaltet ist die Daten der Objekte und die Daten der Gleichlaufbeziehungen zwischen den Objekten auf konkreten Variablen hin zu untersuchen, welche folgende Unterdaten aufweisen:
eine Identifikationsnummer eines Objektes,
einen Typ, welcher die Werte Masterobjekt oder Slaveobjekt annehmen kann,
einen Zustand, welcher aktiv oder inaktiv angibt,
eine Betriebsart, welcher die Werte Geschwindigkeits- oder Positionsgleichlauf angibt,
eine Liste, welche die Identifikationsnummern der potentiellen Masterobjekte zu einem Slave angibt.

Ein Algoritmus zur Darstellung der aktiven Gleichläufe lässt sich weiter vereinfachen, wenn das Analysewerkzeug dazu ausgestaltet ist die Anwenderprogramme auf Projektdateien zu durchsuchen, in welchen Gleichlaufbeziehungen zwischen den Objekten konfiguriert wurden, um aus den Projektdateien eine Menge an potentiellen Kopplungen zwischen den Objekten zu ermitteln.

Für das eingangs genannte Verfahren wird die Aufgabe dadurch gelöst, dass mittels einer Vorrichtung zur grafischen Darstellung der Gleichlaufbeziehungen zwischen den Objekten, ein Analysewerkzeug derart betrieben wird, dass die Anwenderprogramme bezüglich der Objekte und der Gleichlaufbeziehungen zwischen den Objekten datentechnisch analysiert werden und es werden aus den analytisch ermittelten Daten zum einen ein erster Datensatz über die verwendeten Objekte und zum anderen ein zweiter Datensatz über einen zeitlichen Bezug von aktiven und inaktiven Gleichlaufbeziehungen zwischen den Objekten ermittelt, zur Darstellung auf einen Display wird ein Aufbereitungsmittel betrieben, welches anhand des ermittelten ersten Datensatzes und des ermittelten zweiten Datensatzes die Objekte mit ihrem aktiven und/oder inaktiven Gleichlaufbeziehungen grafisch darstellt, wobei mittels eines Aufzeichnungsmittels ein erster Lesedienst auf dem ersten Steuerungsgerät und ein zweiter Lesedienst auf dem zweiten Steuerungsgerät installiert, wobei die Lesedienste eine Ablaufverfolgung der Objekte im ersten Anwenderprogramm bzw. eine Ablaufverfolgung der Objekte im zweiten Anwenderprogramm durchführen und dabei eine zeitliche Zuordnung zu Zustandsdaten, Synchronisationsdaten und Betriebsartdaten der Objekte in einer ersten Ablaufdatei bzw. in einer zweiten Ablaufdatei aufzeichnen, weiterhin wird mittels des Aufbereitungsmittels mithilfe der aufgezeichneten Ablaufdateien der Steuerungsgeräte ein Verlauf der aktiven Gleichlaufbeziehungen zwischen zwei Objekten, welche sich auf unterschiedlichen Steuerungsgeräten befinden, auf dem Display angezeigt.

Die Diagnosefähigkeit wird noch einmal verbessert, wenn mit dem Aufbereitungsmittel weiterhin ein Zeitschieberegler für die Darstellung in dem Display aufbereitet wird und mittels des Zeitschiebereglers kann ein Wartungspersonal den Verlauf der aktiven Gleichlaufbeziehung auf dem Display für einen jeweils angewählten Zeitpunkt anzeigen und damit den Verlauf der aktiven Gleichlaufbeziehung, insbesondere der verteilten Gleichlaufbeziehungen, nachvollziehen.

Weiterhin ist es vorteilhaft, wenn mit dem Analysewerkzeug die Daten der Objekte und die Daten der Gleichlaufbeziehung zwischen den Objekten auf konkrete Variablen hin untersucht werden, dabei werden folgende Unterdaten untersucht:
eine Identifikationsnummer eines Objektes,
einen Typ, welcher die Werte Masterobjekt oder Slaveobjekt annehmen kann,
einen Zustand, welcher aktiv oder inaktiv angibt, eine Betriebsart welche die Werte Geschwindigkeits- oder Positionsgleichlauf angibt,
eine Liste, welche die Identifikationsnummer der potentiellen Masterobjekte zu einem Slave angibt.

Auch ist es vorteilhaft, wenn mit dem Analysewerkzeug die Anwenderprogramme auf Projektdateien durchsucht werden, in welchen Gleichlaufbeziehungen zwischen den Objekten konfiguriert und festgelegt wurden, und aus den Projektdateien eine Menge an potentiellen Kopplungen zwischen den Objekten ermittelt werden.

Ein Ausführungsbeispiel des erfindungsgemäßen Verfahrens und der erfindungsgemäßen Vorrichtung wird nachfolgend anhand einer Zeichnung erläutert. Dabei zeigt:
- FIG 1: eine Industrieanlage mit Antrieben und einer Vorrichtung zur grafischen Darstellung von Gleichlaufbeziehungen,
- FIG 2: ein Objekt, also ein Technologieobjekt, welches den Antrieben zu geordnet wird und
- FIG 3: ein Beispiel für einen verteilten Gleichlauf zwischen mehreren Steuerungen.

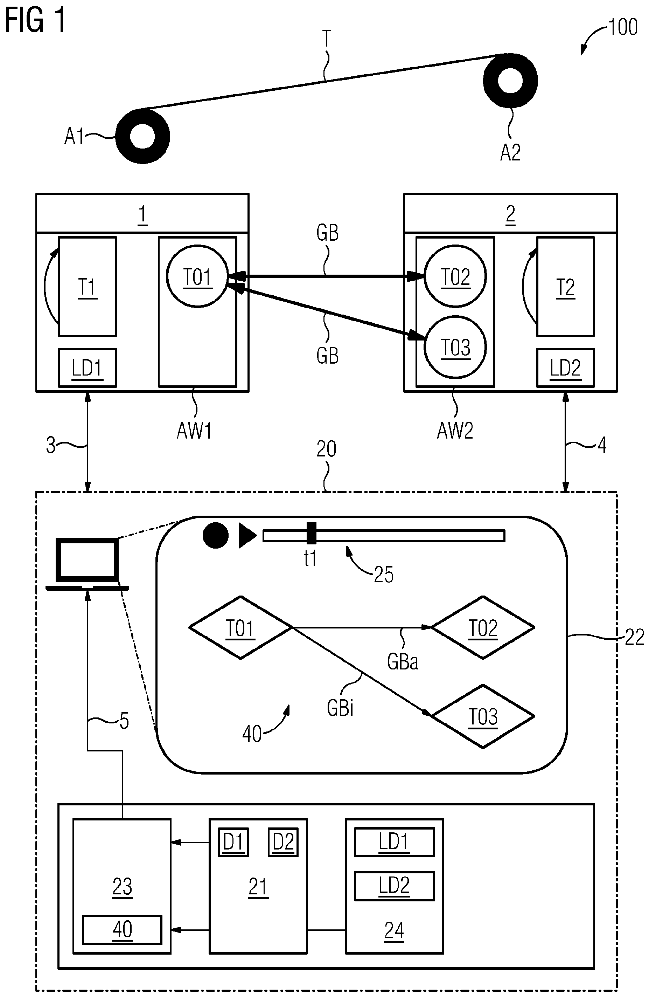

Gemäß FIG 1 ist eine Industrieanlage 100 mit einem ersten Steuerungsgerät 1 und einem zweiten Steuerungsgerät 2 dargestellt. Das erste Steuerungsgerät 1 weist ein erstes Anwenderprogramm AW1 auf und das zweite Steuerungsgerät 2 weist ein zweites Anwenderprogramm AW2 auf. In dem ersten Anwenderprogramm AW1 ist ein erstes Objekt T01 eingebettet. Das erste Objekt T01 ist für die Steuerung und Regelung des ersten Antriebes A1 zuständig. In dem zweiten Anwenderprogramm AW2 ist ein zweites Objekt T02 und ein drittes Objekt T03 eingebettet, wobei das zweite Objekt T02 für die Steuerung des zweiten Antriebes A2 zuständig ist.

Der erste Antrieb A1 ist mit dem zweiten Antrieb A2 über ein Transportband T verbunden. Damit das Transportband T nicht reißt, müssen beide Antriebe A1, A2 synchron laufen, es besteht also zwischen dem ersten Antrieb A1 und dem zweiten Antrieb A2 eine Gleichlaufbeziehung. Da die Antriebe A1 und A2 von unterschiedlichen Steuerungsgeräten 1, 2 gesteuert werden, spricht man von einem verteilten Gleichlauf.

Den verteilten Gleichlauf kann man auch als eine elektrische Welle verstehen. Unter einer elektrischen Welle versteht man die Nachbildung der Funktion einer mechanischen Welle mit Hilfe von elektrischen Maschinen. Dabei wird die mechanische Verbindung durch eine geeignete Beschaltung der Maschinen oder auch durch eine Regelung ersetzt. Das Ziel ist eine winkeltreue Übertragung von Drehbewegungen und Momenten ohne eine mechanische Kopplung.

Demnach sind den Antrieben A1, A2 in den Anwenderprogrammen AW1, AW2 die Objekte T01, T02 zugeordnet und um diese mechanische Kopplung der Welle nachzubilden, besteht zwischen dem ersten Objekt T01 und dem zweiten Objekt T02 eine Gleichlaufbeziehung GB. Da in den Anwenderprogrammen AW1, AW2 eine Mehrzahl unterschiedlicher Ablaufstrukturen ablaufen, welche auf die Gleichlaufbeziehungen GB zwischen den Objekten T01, T02, T03 derart Einfluss nehmen, dass eine Gleichlaufbeziehung GB entweder eine aktive Gleichlaufbeziehung GBa oder eine inaktive Gleichlaufbeziehung GBi ist, ändert sich ein Status der Gleichlaufbeziehung in Abhängigkeit vom Programmablauf.

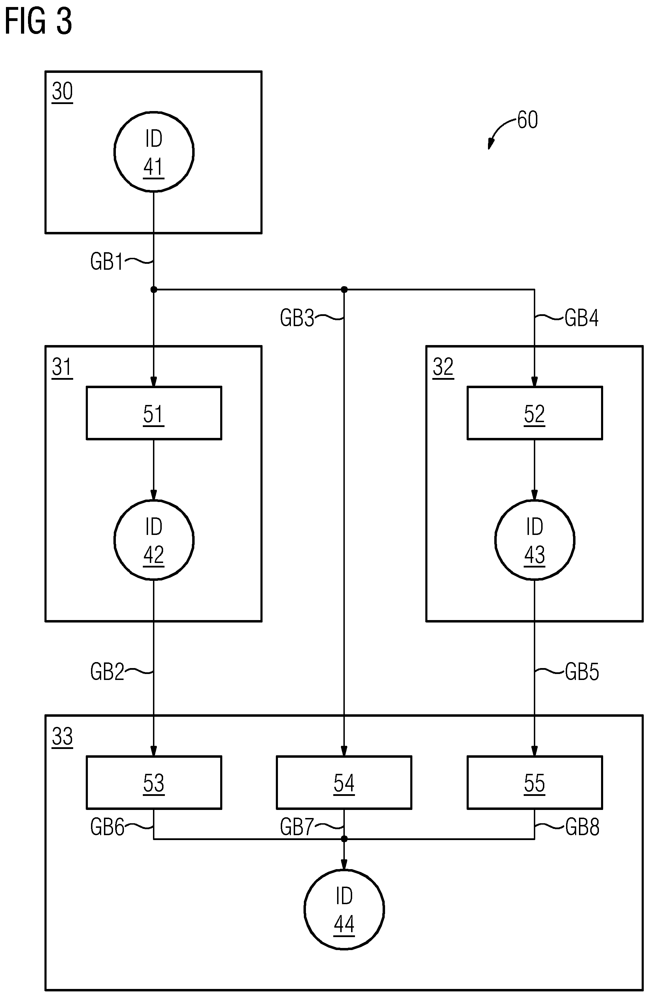

Um insbesondere für Inbetriebsetzer der Industrieanlage 100 eine Inbetriebsetzung und/oder eine Diagnosemöglichkeit zu erleichtern, wird erfindungsgemäß eine Vorrichtung 20 zur grafischen Darstellung von Gleichlaufbeziehungen GBa, GBi zwischen den Objekten T01, T02, T03 bereitgestellt. Die Vorrichtung 20 weist ein Analysewerkzeug 21 auf, welches ausgestaltet ist die Anwenderprogramme AW1, AW2 bezüglich der Objekte T01, T02, T03 und der parametrierten Gleichlaufbeziehungen zwischen den Objekten T01, T02, T03 datentechnisch zu analysieren. Das Analysewerkzeug 21 ist dabei dazu ausgestaltet, die Anwenderprogramme AW1, AW2 auf das Vorhandensein von Projektdateien zu durchsuchen, in welchen Gleichlaufbeziehungen zwischen den Objekten T01, T02, T03 konfiguriert wurden, um aus den Projektdaten eine Menge an potentionellen Kopplungen 60 zwischen den Objekten T01, T02, T03 zu erhalten. Zur Veranschaulichung der potentiellen Kopplungen 60 siehe auch FIG 3.

Zur grafischen Darstellung der Gleichlaufbeziehungen zwischen den Objekten T01, T02, T03 ist ein Aufbereitungsmittel 23 vorhanden, welches ausgestaltet ist anhand des ermittelten ersten Datensatzes D1 und des ermittelten zweiten Datensatzes D2 die Objekte T01, T02, T03 mit ihren aktiven oder inaktiven Gleichlaufbeziehungen GBa, GBi grafisch darzustellen.

Eine Auswahl an aktiven Gleichläufen erfolgt während der Maschinenlaufzeit situationsbedingt durch die Steuerungsprogramme AW1 und AW2. Die Darstellung der Gleichläufe zwischen den Objekten T01, T02, T03 erfolgt dabei als Diagramm über die Zeit. Für eine Maschineninbetriebnahme benötigt der Benutzer also Informationen über die jeweils aktiven Gleichläufe GBa. Dabei ist es zu beachten, dass es aufgrund einer hohen Abarbeitungsgeschwindigkeit der Steuerungsprogramme AW1, AW2 zu häufigen Änderungen der aktiven Gleichläufe GBa kommt, welche auch nachträglich nachvollziehbar gemacht werden müssen.

Dazu ist es vorteilhaft, dass die Vorrichtung 20 ein Aufzeichnungsmittel 24 aufweist, welches ausgestaltet ist einen ersten Lesedienst LD1 auf dem ersten Steuerungsgerät 1 und einen zweiten Lesedienst LD2 auf dem zweiten Steuerungsgerät 2 zu installieren, wobei die Lesedienste LD1, LD2 ausgestaltet sind eine Ablaufverfolgung des ersten Objektes T01 im ersten Anwenderprogramm AW1 und eine Ablaufverfolgung des zweiten Objektes T02 und des dritten Objektes T03 im zweiten Anwenderprogramm AW2 durchzuführen. Mit den Lesediensten LD1, LD2 wird eine erste Ablaufdatei T1 bzw. eine zweite Ablaufdatei T2 aufgezeichnet. Um nun den Verlauf der aktiv verteilten Gleichläufe nachvollziehbar zu machen, werden mit den Lesediensten LD1, LD2 quasi Aufzeichnungsfunktionen auf den Steuerungsgeräten 1, 2 eingerichtet, welcher einem Trace entsprechen. Dabei kann auch eine dauerhafte Aufzeichnung realisiert werden, nämlich ein Endlostrace.

Das Aufbereitungsmittel 23 ist dabei weiterhin dazu ausgestaltet, mit den aufgezeichneten Ablaufdateien T1, T2 der Steuerungsgeräte 1, 2 einen Verlauf 40 der aktiven Gleichlaufbeziehungen GBa zwischen zwei Objekten T01, T02, welche sich auf unterschiedlichen Steuerungsgeräten 1, 2 befinden, aus dem Display 22 anzuzeigen.

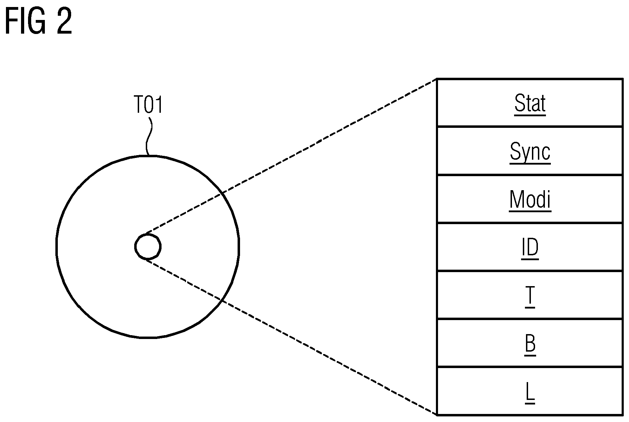

Damit hat man den Verlauf der aktiven Gleichlaufbeziehungen GBa nachvollziehbar gemacht. Zu den erforderlichen Daten gehören eine Konfiguration der projektierten Verschaltungen und der Kommunikation zwischen den Steuerungsgeräten 1, 2, die aktuellen Verschaltungszustände (z.B. inaktiv, aktiv, Synchronisation, ausgewählter Verschaltungspartner) sowie aktuelle Objektzustände (z.B. Abarbeitung oder Fehlerzustand). Das Analysewerkzeug 21 ist dabei dazu ausgestaltet die Daten der Objekte T01, T02, T03 und die Daten der Gleichlaufbeziehungen GBi, GBa zwischen den Objekten T01, T02, T03 auf konkrete Variablen hin zu untersuchen, welche folgende Unterdaten aufweisen:
eine Identifikationsnummer ID (siehe hierzu Beispiel in FIG 2), einen Typ T, welcher die Werte Masterobjekt oder Slaveobjekt annehmen kann, einen Zustand Z, welcher aktiv oder inaktiv angibt, eine Betriebsart B, welche die Werte Geschwindigkeits- oder Positionsgleichlauf angibt, eine Liste L, welche die Identifikationsnummern ID der potentiellen Masterobjekte zu einem Slave angibt.

Das Aufbereitungsmittel 23 ist weiterhin dazu ausgestaltet einen Zeitschieberegler 25 für die Darstellung in dem Display 22 aufzubereiten, der Zeitschieberegler 25 ist dabei dazu ausgestaltet den Verlauf 40 der aktiven Gleichlaufbeziehung GBa auf dem Display 22 für einen jeweils ausgewählten Zeitpunkt t1 anzuzeigen und damit den Verlauf der aktiven Gleichlaufbeziehungen GBa nachvollziehbar zu machen.

In dem Display 22 steht der Zeitschieberegler 25 auf dem Zeitpunkt t1 und zu dem Zeitpunkt t1 hat das erste Objekt T01 mit dem zweiten Objekt T02 eine aktive Gleichlaufbeziehung GBa und das erste Objekt T01 hat mit dem dritten Objekt T03 eine inaktive Gleichlaufbeziehung GBi.

Über das Aufbereitungsmittel 23 werden die hierfür benötigten Grafikdaten 5 für das Display 22 aufbereitet. Der erste Lesedienst LD1 in dem ersten Anwenderprogramm AW1 bzw. in dem ersten Steuergerät 1 sendet seine Daten über einen ersten Datenpfad 3 zu der Vorrichtung 20. Der zweite Lesedienst LD2 in dem zweiten Steuerungsgerät 2 sendet seine Daten über einen zweiten Datenpfad 4 zu der Vorrichtung 20.

Mit der FIG 2 ist das erste Objekt T01 mit seinen für eine Ermittlung einer Gleichlaufbeziehung, Variablen bzw. seinen Unterdaten dargestellt. Eine Identifikationsnummer ID gibt an, um welches Objekt es sich handelt. Ein Typ T sagt aus, ob es ein Master oder ein Slave ist. Eine Liste L kann mögliche andere Identifikationsnummer ID von anderen potentiellen Masterobjekten zu diesem Objekt enthalten, wenn dieses Objekt ein Slave ist. Zustandsdaten Statt, Synchronisationsdaten Sync und Betriebsartdaten Modi sind ebenfalls vorhanden.

Mit der FIG 3 ist ein Konfigurationsbeispiel für Gleichlaufbeziehungen zwischen unterschiedlichen Steuerungsgeräten dargestellt. In einer Hauptsteuerung 30 ist ein Objekt 41 für eine Masterachse implementiert. In einer ersten Nebensteuerung 31 ist ein Objekt 42 für eine erste Achse implementiert. In einer zweiten Nebensteuerung 32 ist ein Objekt 43 für eine zweite Achse parametriert. In einer Transfersteuerung 33 ist ein Objekt 44 für eine Transferachse implementiert.

Mit der FIG 3 sind demnach die Menge der möglichen potentiellen Kopplungen 60 dargestellt. Das Objekt 41 für die Masterachse hat mit dem Objekt 22 für die erste Achse eine erste Gleichlaufbeziehung GB1. Aber ebenfalls hat das Objekt 41 für die Masterachse mit dem Objekt 44 für die Transferachse eine dritte Gleichlaufbeziehung GB3 und mit dem Objekt 43 für die zweite Achse eine vierte Gleichlaufbeziehung GB4. Eine zweite Gleichlaufbeziehung GB2 besteht zwischen dem Objekt 42 für die erste Achse zu dem Objekt 44 für die Transferache. Analog dazu hat das Objekt 43 für die zweite Achse eine fünfte Gleichlaufbeziehung GB5 zu dem Objekt 44 für die Transferachse. Jedes der Objekte 41, 42,43, 44 weist eine eindeutige Identifikationsnummer ID auf. Abgesehen von dem Objekt 41 für die Masterachse weisen die restlichen Objekte 42, 43 für die erste Achse und die zweite Achse bzw. das Objekt 44 für die Transferachse Stellvertreter 51, 52, 53, 54, 55 auf. Diese Stellvertreter 51,...,55 sind als sogenannte Proxy anzusehen. Insbesondere wenn das Objekt 44 für die Transferachse zu drei anderen Objekten Gleichlaufbeziehungen aufrechterhält sind die Stellvertreter nützlich, demnach sind dem Objekt 44 für die Transferachse ein dritter Stellvertreter 53, ein vierter Stellvertreter 54 und ein fünfter Stellvertreter 55 vorgeschaltet. Entsprechend weist das Objekt 42 für die erste Achse einen vorgeschalteten ersten Stellvertreter 51 und das Objekt 43 für die zweite Achse einen zweiten Stellvertreter 52 auf.

Die genannten Objekte T01,T02,T03 sind als Technologieobjekte anzusehen und repräsentieren reale Objekte (z. B. eine Achse) in der Steuerung. Die Funktionen der Technologieobjekte können über bestimmte Anweisungen in dem Anwenderprogramm aufgerufen werden. Diese Funktionen werden unabhängig vom Anwenderprogramm in den Organisationsbausteinen für beispielsweise ein Engineering-System Motion Control Aufgaben) ausgeführt. Die Technologieobjekte steuern bzw. regeln die Bewegung der realen Objekte und melden Statusinformation (z. B. die aktuelle Position) zurück.

Die Konfiguration der Technologieobjekte repräsentiert die Eigenschaften des realen Objekts. Die Konfigurationsdaten werden in einem Technologie-Datenbaustein gespeichert.

So kann beispielsweise eine nichtlineare Abhängigkeit der Position einer Folgeachse zu einer Leitachse bei einer Gleichlaufkopplung definiert werden. Ein Technologieobjekt Kurvenscheibe lässt sich mehrfach an verschiedenen Technologieobjekten anwenden.

Für eine Gleichlaufkopplung von zwei Achsen kann auch die Istposition (Istwertkopplung) einer anderen Achse oder eines externen Gebers als Leitwert genutzt werden Das Technologieobjekt Gleichlaufachse kann im Anwenderprogramm zusätzlich, wie das Technologieobjekt Positionierachse behandelt werden, d.h. die Achse kann auch ohne aktivierten Gleichlauf aus dem Anwenderprogramm heraus genau auf eine vorgegebene Position positioniert werden.

## Patentansprüche

1. Industrieanlage (100) umfassend
- ein erstes Steuerungsgerät (1), in welchem ein erstes Anwenderprogramm (AW1) abläuft,
- ein zweites Steuerungsgerät (2), in welchem ein zweites Anwenderprogramm (AW1) abläuft,
- eine Mehrzahl an Antrieben (A1, A2), welche von den Anwenderprogrammen (AW1, AW2) angesteuert und/oder geregelt werden,
wobei den Antrieben (A1,A2) in den Anwenderprogrammen (AW1, AW2) Objekte (TO1, TO2, TO3) zugeordnet sind, wobei zwischen den Objekten (TO1, TO2, TO3) Gleichlaufbeziehungen (GB) bestehen, wobei die Anwenderprogramme (AW1, AW2) eine Mehrzahl unterschiedlicher Ablaufstrukturen aufweisen, welche auf die Gleichlaufbeziehungen (GB) zwischen den Objekten (TO1, TO2, TO3) derart Einfluss nehmen, dass eine Gleichlaufbeziehung (GB) entweder eine aktive Gleichlaufbeziehung (GBa) oder eine inaktive Gleichlaufbeziehungen (GBi) ist,
**gekennzeichnet, durch**
eine Vorrichtung (20) zur grafischen Darstellung von Gleichlaufbeziehungen (GBa,GBi) zwischen den Objekten (TO1, TO2, TO3), die ein Analysewerkzeug (21) aufweist, welches ausgestaltet ist die Anwenderprogramme (AW1, AW2) bezüglich m der Objekte (TO1, TO2, TO3) und der Gleichlaufbeziehungen (GB) zwischen den Objekten (TO1, TO2, TO3) datentechnisch zu analysieren und weiterhin ausgestaltet ist, aus den analytisch ermittelten Daten zum einen einen ersten Datensatz (D1) über die verwendeten Objekte (TO1, TO2, TO3) und zum anderen einen zweiten Datensatz (D2) über einen zeitlichen Bezug von aktiven und inaktiven Gleichlaufbeziehungen (GBa,GBi) zwischen den Objekten (TO1, TO2, TO3) zu erhalten, wobei zur Darstellung auf einem Display (22) ein Aufbereitungsmittel (23) vorhanden ist, welches ausgestaltet ist anhand des ermittelten ersten Datensatzes (D1) und des ermittelten zweiten Datensatzes (D2) die Objekte (TO1, TO2, TO3) mit ihren aktiven und oder inaktiven Gleichlaufbeziehungen (GBa,GBi) grafisch darzustellen,
wobei die Vorrichtung (20) ein Aufzeichnungsmittel (24) aufweist, welches ausgestaltet ist einen ersten Lesedienst (LD1) auf dem ersten Steuerungsgerät (1) und einen zweiten Lesedienst (LD2) auf dem zweiten Steuerungsgerät (2) zu installieren, wobei die Lesedienste (LD1,LD2) dazu ausgestaltet sind eine Ablaufverfolgung der Objekte (TO1, TO2, TO3) im ersten Anwenderprogramm (AW1) bzw. im zweiten Anwenderprogramm (AW2) durchzuführen und dabei eine zeitliche Zuordnung zu Zustandsdaten (Stat), Synchronisationsdaten (Sync) und Betriebsartdaten (Moti) der Objekte (TO1, TO2, TO3) in einer ersten Ablaufdatei (T1) bzw. einer zweiten Ablaufdatei (T2) aufzuzeichnen, wobei
weiterhin das Aufbereitungsmittel (23) dazu ausgestaltet ist, mit Hilfe der aufgezeichneten Ablaufdateien (T1,T2) der Steuerungsgeräte (1,2) einen Verlauf (40) der aktiven Gleichlaufbeziehung (GBa) zwischen zwei Objekten (TO1, TO2, TO3), welche sich auf unterschiedlichen Steuerungsgeräten (1,2) befinden, auf dem Display (22) anzuzeigen.

2. Industrieanlage (100) Anspruch 1, wobei das Aufbereitungsmittel (23) weiterhin dazu ausgestaltet ist einen Zeitschieberegler (25) für die Darstellung in dem Display (22) aufzubereiten, und dass der Zeitschieberegler (24) dazu ausgestaltet ist den Verlauf (40) der aktiven Gleichlaufbeziehung (GBa) auf dem Display (22) für einen jeweils angewählten Zeitpunkt anzuzeigen und damit den Verlauf der aktiven Gleichlaufbeziehungen (GBa) nachvollziehbar zu machen.

3. Industrieanlage (100) nach einem der Ansprüche 1 bis 2, wobei das Analysewerkzeug (21) dazu ausgestaltet ist die Daten der Objekte (TO1, TO2, TO3) und die Daten der Gleichlaufbeziehungen (GBi,GBa) zwischen den Objekten (TO1, TO2, TO3) auf konkrete Variablen hin zu untersuchen, welche folgende Unterdaten aufweisen:
eine Identifikationsnummer (ID) eines Objektes (TO1,..,TO3), einen Typ (T), welcher die Werte Masterobjekt oder Slaveobjekt annehmen kann,
einen Zustand (Z), welcher aktiv oder inaktiv angibt,
eine Betriebsart (B), welche die Werte Geschwindigkeits- oder Positionsgleichlauf angibt,
eine Liste (L), welche die Identifikationsnummern (ID) der potentiellen Masterobjekte zu einem Slave angibt.

4. Industrieanlage (100) nach einem der Ansprüche 1 bis 3, wobei das Analysewerkzeug (21) dazu ausgestaltet ist die Anwenderprogramme (AW1, AW2) auf Projektdateien zu durchsuchen, in welchen Gleichlaufbeziehungen zwischen den Objekten (TO1, TO2, TO3) konfiguriert wurden, um aus den Projektdateien eine Menge an potenziellen Kopplungen (60) zwischen den Objekten (TO1, TO2, TO3) zu ermitteln.

5. Verfahren zur grafischen Darstellung von Gleichlaufbeziehungen (GBa,GBi) zwischen einer Mehrzahl an Antrieben in einer Industrieanlage (100), wobei den Antrieben in einem ersten Anwenderprogramm (AW1) für ein erstes Steuerungsgerät (1) und in einem zweiten Anwenderprogramm (AW2) für ein zweites Steuerungsgerät (2) Objekte (TO1, TO2, TO3) zugeordnet werden und die Objekte (TO1, TO2, TO3) konfiguriert werden,
wobei die Mehrzahl an Antrieben (A1, A2) von den Anwenderprogrammen (AW1, AW2) angesteuert und/oder geregelt wird, die Anwenderprogramme (AW1, AW2) derart ausgeführt werden, dass eine Mehrzahl unterschiedlicher Ablaufstrukturen auftritt, welche auf die Gleichlaufbeziehungen (GB) zwischen den Objekten (TO1, TO2, TO3) derart Einfluss nehmen, dass eine Gleichlaufbeziehung (GB) entweder eine aktive Gleichlaufbeziehung (GBa) oder eine inaktive Gleichlaufbeziehung (GBa) ist,
**dadurch gekennzeichnet, dass** mittels einer Vorrichtung (20) zur grafischen Darstellung der Gleichlaufbeziehungen (GBa,GBi) zwischen den Objekten (TO1, TO2, TO3) ein Analysewerkzeug (21) derart betrieben wird, dass die Anwenderprogramme (AW1, AW2) bezüglich der Objekte (TO1, TO2, TO3) und der Gleichlaufbeziehungen zwischen den Objekten (TO1, TO2, TO3) datentechnisch analysiert werden und aus den analytisch ermittelten Daten zum einen ein erster Datensatz (D1) über die verwendeten Objekte (TO1, TO2, TO3) und zum anderen ein zweiter Datensatz (D2) über einen zeitlichen Bezug von aktiven und inaktiven Gleichlaufbeziehungen (GBa,GBi) zwischen den Objekten (TO1, TO2, TO3) ermittelt wird, zur Darstellung auf einem Display (22) ein Aufbereitungsmittel (23) betrieben wird, welches anhand des ermittelten ersten Datensatzes (D1) und des ermittelten zweiten Datensatzes (D2) die Objekte (TO1, TO2, TO3) mit ihren aktiven und oder inaktiven Gleichlaufbeziehungen (GBa,GBi) grafisch darstellt,
wobei weiterhin mittels eines Aufzeichnungsmittels (24) ein erster Lesedienst (LD1) auf dem ersten Steuerungsgerät (1) und ein zweiter Lesedienst (LD2) auf dem zweiten Steuerungsgerät (2) installiert wird, wobei die Lesedienste (LD1,LD2) eine Ablaufverfolgung der Objekte (TO1, TO2, TO3) im ersten Anwenderprogramm (AW1) bzw. der Objekte (TO1, TO2, TO3) im zweiten Anwenderprogramm (AW2) durchführen und dabei eine zeitliche Zuordnung zu Zustandsdaten (Stat), Synchronisationsdaten (Sync) und Betriebsartdaten (Moti) der Objekte (TO1, TO2, TO3) in einer ersten Ablaufdatei (T1) bzw. einer zweiten Ablaufdatei (T1) aufzeichnen wobei weiterhin mittels des Aufbereitungsmittels (23) mit Hilfe der aufgezeichneten Ablaufdateien (T1,T2) der Steuerungsgeräte (1,2) ein Verlauf (40) der aktiven Gleichlaufbeziehung (GBa) zwischen zwei Objekten (TO1, TO2, TO3), welche sich auf unterschiedlichen Steuerungsgeräten (1,2) befinden, auf dem Display (22) angezeigt wird.

6. Verfahren nach Anspruch 5,
wobei mit dem Aufbereitungsmittel (23) weiterhin ein Zeitschieberegler (24) für die Darstellung in dem Display (22) aufbereitet wird und mittels des Zeitschiebereglers (24) ein Wartungspersonal den Verlauf (40) der aktiven Gleichlaufbeziehung (GBa) auf dem Display (22) für einen jeweils angewählten Zeitpunkt anzeigen kann und damit den Verlauf der aktiven Gleichlaufbeziehungen (GBa) nachvollziehen.

7. Verfahren nach einem der Ansprüche 5 bis 6,
wobei mit dem Analysewerkzeug (21) die Daten der Objekte (TO1, TO2, TO3) und die Daten der Gleichlaufbeziehungen (GBi,GBa) zwischen den Objekten (TO1, TO2, TO3) auf konkrete Variablen hin untersucht werden, dabei werden folgende Unterdaten untersucht:
eine Identifikationsnummer (ID) eines Objektes (TO1,..,TO3), einen Typ (T), welcher die Werte Masterobjekt oder Slaveobjekt annehmen kann,
einen Zustand (Z), welcher aktiv oder inaktiv angibt,
eine Betriebsart (B), welche die Werte des Geschwindigkeits- oder Positionsgleichlauf, angibt,
eine Liste (L), welche die Identifikationsnummern (ID) der potentiellen Masterobjekte zu einem Slave angibt.

8. Verfahren nach einem der Ansprüche 5 bis 7,
wobei mit dem Analysewerkzeug (21) die Anwenderprogramme (AW1, AW2) auf Projektdateien durchsucht werden, in welchen Gleichlaufbeziehungen zwischen den Objekten (TO1, TO2, TO3) konfiguriert und festgelegt wurden, und aus den Projektdateien eine Menge an potenziellen Kopplungen zwischen den Objekten (TO1, TO2, TO3) ermittelt werden.

## Claims

1. Industrial plant (100) comprising
- a first control device (1), in which a first user program (AW1) runs,
- a second control device (2), in which a second user program (AW1) runs,
- a plurality of drives (A1, A2), which are controlled and/or regulated by the user programs (AW1, AW2),
wherein objects (TO1, TO2, TO3) are assigned to the drives (A1, A2) in the user programs (AW1, AW2), wherein synchronous relationships (GB) exist between the objects (TO1, TO2, TO3), wherein the user programs (AW1, AW2) have a plurality of different flow structures, which have an influence on the synchronous relationships (GB) between the objects (TO1, TO2, TO3) such that a synchronous operation (GB) is either an active synchronous relationship (GBa) or an inactive synchronous relationship (GBi),
**characterised by**
an apparatus (20) for graphical representation of synchronous relationships (GBa, GBi) between the objects (TO1, TO2, TO3), which has an analysing tool (21) which is designed to analyse the user programs (AW1, AW2) in respect of the objects (TO1, TO2, TO3) and the synchronous relationships (GB) between the objects (TO1, TO2, TO3) via data link and is further designed to obtain a first data record (D1) relating to the used objects (TO1, TO2, TO3) on the one hand and a second data record (D2) relating to a temporal relation between active and inactive synchronous relationships (GBa, GBi) between the objects (TO1, TO2, TO3) on the other hand from the analytically determined data, wherein a preparation means (23) exists for representation on a display (22) which is designed to graphically represent the objects (TO1, TO2, TO3) with their active and or inactive synchronous relationships (GBa, GBi) on the basis of the determined first data record (D1) and the determined second data record (D2),
wherein the apparatus (20) has a recording means (24) which is designed to install a first read service (LD1) on the first control device (1) and a second read service (LD2) on the second control device (2), wherein the read services (LD1,LD2) are designed to carry out a tracing of the objects (TO1, TO2, TO3) in the first user program (AW1) or in the second user program (AW2) and in the process to record a temporal assignment to status data (Stat), synchronisation data (Sync) and operating mode data (Moti) of the objects (TO1, TO2, TO3) in a first trace file (T1) or a second trace file (T2), wherein furthermore the preparation means (23) is designed to indicate on the display (22) with the aid of the recorded trace files (T1, T2) of the control devices (1,2) a course (40) of the active synchronous relationship (GBa) between two objects (TO1, TO2, TO3) which are disposed on different control devices (1,2).

2. Industrial plant (100) according to claim 1,
wherein the preparation means (23) is further designed to prepare a time slider (25) for representation in the display (22), and the time slider (24) is designed here to display the course (40) of the active synchronous relationship (GBa) on the display (22) for a respectively selected time instant and thus to render clear and transparent the course of the active synchronous relationships (GBa).

3. Industrial plant (100) according to one of claims 1 to 2, wherein the analysing tool (21) is designed to examine the data of the objects (TO1, TO2, TO3) and the data of the synchronous relationships (GBi, GBa) between the objects (TO1, TO2, TO3) for specific variables which have the following subdata:
an identification number (ID) of an object (TO1,..,TO3),
a type (T) which can assume the values master object or slave object,
a state (Z) which specifies active or inactive,
an operating mode (B), which specifies the values speed or position synchronous operation,
a list (L) which specifies the identification numbers (ID) of the potential master objects to a slave.

4. Industrial plant (100) according to one of claims 1 to 3, wherein the analysing tool (21) is designed to browse the user programs (AW1, AW2) for project files in which synchronous relationships have been configured between the objects (TO1, TO2, TO3) in order to determine a quantity of potential couplings (60) between the objects (TO1, TO2, TO3) from the project files.

5. Method for graphical representation of synchronous relationships (GBa, GBi) between a plurality of drives in an industrial plant (100), wherein objects (TO1, TO2, TO3) are assigned to the drives in a first user program (AW1) for a first control device (1) and in a second user program (AW2) for a second control device (2) and the objects (TO1, TO2, TO3) are configured, wherein the plurality of drives (A1, A2) is controlled and/or regulated by the user programs (AW1, AW2), the user programs (AW1, AW2) are executed such that a plurality of different flow structures occurs, which have an influence on the synchronous relationships (GB) between the objects (TO1, TO2, TO3) such that a synchronous relationship (GB) is either an active synchronous relationship (GBa) or an inactive synchronous relationship (GBa),
**characterised in that** by means of an apparatus (20) for graphical representation of the synchronous relationships (GBa, GBi) between the objects (TO1, TO2, TO3), an analysing tool (21) is operated so that the user programs (AW1, AW2) are analysed with respect to the objects (TO1, TO2, TO3) and the synchronous relationships (GB) between the objects (TO1, TO2, TO3) via data link and a first data record (D1) relating to the used objects (TO1, TO2, TO3) on the one hand and a second data record (D2) relating to a temporal relation between active and inactive synchronous relationships (GBa, GBi) between the objects (TO1, TO2, TO3) on the other hand is determined from the analytically determined data, a preparation means (23) is operated for representation on a display (22) which preparation means uses the determined first data record (D1) and the determined second data record (D2) to graphically represent the objects (TO1, TO2, TO3) with their active and or inactive synchronous relationships (GBa, GBi), wherein by means of a recording means (24), a first read service (LD1) is installed on the first control device (1) and a second read service (LD2) is installed on the second control device (2), wherein the read services (LD1,LD2) carry out a tracing of the objects (TO1, TO2, TO3) in the first user program (AW1) or the objects (TO1, TO2, TO3) in the second user program (AW2) and in the process record a temporal assignment to status data (Stat), synchronisation data (Sync) and operating mode data (Moti) of the objects (TO1, TO2, TO3) in a first trace file (T1) or a second trace file (T1), furthermore a course (40) of the active synchronous relationship (GBa) between two objects (TO1, TO2, TO3), which are located on different control devices (1,2), is shown on the display (22) by means of the preparation means (23) with the aid of the recorded trace files (T1,T2) of the control devices (1,2).

6. Method according to claim 5,
wherein a time slider (24) for the representation in the display (22) is further prepared with the preparation means (23) and by means of the time slider (24), a maintenance personnel can display the course (40) of the active synchronous relationship (GBa) on the display (22) for a respectively selected time instant and thus understand the course of the active synchronous relationships (GBa).

7. Method according to one of claims 5 to 6,
wherein with the analysing tool (21) the data of the objects (TO1, TO2, TO3) and the data of the synchronous relationships (GBi, GBa) between the objects (TO1, TO2, TO3) is examined for specific variables, here the following subdata is examined:
an identification number (ID) of an object (TO1,..,TO3),
a type (T) which can assume the values master object or slave object,
a state (Z) which specifies active or inactive,
an operating mode (B), which specifies the values of speed or position synchronous operation,
a list (L) which specifies the identification numbers (ID) of the potential master objects to a slave.

8. Method according to one of claims 5 to 7,
wherein the analysing tool (21) is used to browse the user programs (AW1, AW2) for project files in which synchronous relationships have been configured and defined between the objects (TO1, TO2, TO3) and a quantity of potential couplings between the objects (TO1, TO2, TO3) is determined from the project data files.

## Revendications

1. Installation (100) industrielle comprenant
- un premier appareil (1) de commande, dans lequel se déroule un premier programme (AW1) d'utilisateur,
- un deuxième appareil (2) de commande, dans lequel se déroule un deuxième programme (AW1) d'utilisateur,
- une pluralité d'entraînements (A1, A2), qui sont commandés et/ou réglés par les programmes (AW1, AW2) d'utilisateur,
dans laquelle des objets (TO1, TO2, TO3) sont affectés aux entraînements (A1, A2) dans les programmes (AW1, AW2) d'utilisateur,
dans laquelle il y a, entre les objets (TO1, TO2, TO3), des relations (GB) de synchronisation, dans laquelle les programmes (AW1, AW2) d'utilisateur ont une pluralité de structures de déroulement différentes, qui prennent de l'influence sur les relations (GB) de synchronisation entre les objets (TO1, TO2, TO3), de manière à ce qu'une relation (GB) de synchronisation soit ou bien une relation (GBa) de synchronisation active ou bien des relations (GBi) de synchronisation inactives,
**caractérisée par**
un dispositif (20) de représentation graphique de relations (GBa, GBi) de synchronisation entre les objets (TO1, TO2, TO3), qui a un outil (21) d'analyse, lequel est conformé pour analyser en technique de données les programmes (AW1, AW2) d'utilisateur concernant les objets (TO1, TO2, TO3) et les relations (GB) de synchronisation des objets (TO1, TO2, TO3) et est conformé en outre,
pour obtenir, à partir des données déterminées analytiquement, d'une part un premier ensemble (D1) de données sur les objets (TO1, TO2, TO3) utilisés et d'autre part un deuxième ensemble (D2) de données sur un rapport temporel des relations (GBa, GBi) de synchronisation actives et inactives entre les objets (TO1, TO2, TO3), dans laquelle il y a, pour une représentation sur un écran (22), un moyen (23) d'exploitation, qui est conformé pour, à l'aide du premier ensemble (D1) de données déterminé et du deuxième ensemble (D2) de données déterminé, représenter graphiquement les objets (TO1, TO2, TO3) avec leurs relations (GBa, GBi) de synchronisation actives et ou inactives,
dans laquelle le dispositif (20) a un moyen (24) d'enregistrement, qui est conformé pour installer un premier service (LD1) de lecture sur le premier appareil (1) de commande et un deuxième service (LD2) de lecture sur le deuxième appareil (2) de commande, dans laquelle les services (LD1, LD2) de lecture sont conformés pour effectuer un suivi de déroulement des objets (TO1, TO2, TO3) dans le premier programme (AW1) d'utilisateur et respectivement dans le deuxième programme (AW2) d'utilisateur et pour enregistrer ainsi une association temporelle à des données (Stat) d'état, à des données (Sync) de synchronisation et à des données (Moti) de type de fonctionnement des objets (TO1, TO2, TO3) dans une premier fichier (T1) de déroulement et respectivement dans un deuxième fichier (T2) de déroulement, dans laquelle en outre le moyen (23) d'exploitation est conformé pour, à l'aide des fichiers (T1, T2) de déroulement enregistrés des appareils (1, 2) de commande, afficher sur l'écran (22) un tracé (40) des relations (GBa) de synchronisation actives entre deux objets (TO1, TO2, TO3), qui se trouvent sur des appareils (1, 2) de commande différents.

2. Installation (100) industrielle suivant la revendication 1, dans laquelle le moyen (23) d'exploitation est conformé en outre pour exploiter un régleur (25) de décalage temporel pour la représentation sur l'écran (22), et en ce que le régleur (24) de décalage temporel est conformé pour afficher le tracé (40) de la relation (GBa) de synchronisation active sur l'écran (22) pour un instant sélectionné respectivement et rendre ainsi restituable le tracé des relations (GBa) de synchronisation actives.

3. Installation (100) industrielle suivant l'une des revendications 1 à 2,
dans laquelle l'outil (21) d'analyse est conformé pour étudier, sur des variables concrètes, les données des objets (TO1, TO2, TO3) et les données des relations (GBi, GBa) de synchronisation des objets (TO1, TO2, TO3), lesquelles variables ont des sous-données suivantes :
un numéro (ID) d'identification d'un objet (TO1, ..., TO3), un type (T), qui peut prendre les valeurs objet-maître ou objet-esclave,
un état (Z), qui indique actif ou inactif,
un type (B) de fonctionnement, qui indique les valeurs de synchronisation de vitesse ou de position,
une liste (L), qui indique le numéro (ID) d'identification des objets maîtres potentiels par rapport à un esclave.

4. Installation (100) industrielle suivant l'une des revendications 1 à 3,
dans lequel l'outil (21) d'analyse est conformé pour rechercher les programmes (AW1, AW2) d'utilisateur sur des fichiers de projet, dans lesquels des relations de synchronisation entre les objets (TO1, TO2, TO3) ont été configurées afin de déterminer, à partir des fichiers de projet, un ensemble de couplages (60) potentiels entre les objets (TO1, TO2, TO3).

5. Procédé de représentation graphique de représentations (GBa, GBi) de synchronisation entre une pluralité d'entraînements dans une installation (100) industrielle, dans lequel on associe des objets (TO1, TO2, TO3) aux entraînements, dans un premier programme (AW1) d'utilisateur, pour un premier appareil (1) de commande et, dans un deuxième programme (AW2) d'utilisateur, pour un deuxième appareil (2) de commande et on configure les objets (TO1, TO2, TO3), dans lequel
on commande et/ou on règle la pluralité d'entraînements (A1, A2) par les programmes (AW1, AW2) d'utilisateur,
on exécute les programmes (AW1, AW2) d'utilisateur, de manière à ce qu'il se produise une pluralité de structures de déroulement différentes, qui prennent de l'influence sur les relations (GB) de synchronisation entre les objets (TO1, TO2, TO3), de manière à ce qu'une relation (GB) de synchronisation soit ou bien une relation (GBa) de synchronisation active ou bien une relation de (GBa) de synchronisation inactive,
**caractérisé en ce qu'**
au moyen d'un dispositif (20) de représentation graphique des relations (GBa, GBi) de synchronisation entre les objets (TO1, TO2, TO3), on fait fonctionner un outil (21) d'analyse, de manière à analyser en technique de données les programmes (AW1, AW2) d'utilisateur concernant les objets (TO1, TO2, TO3) et les relations de synchronisation entre les objets (TO1, TO2, TO3), et on détermine, à partir des données déterminées analytiquement, d'une part, un premier ensemble (D1) de données sur les objets (TO1, TO2, TO3) utilisés et, d'autre part, un deuxième ensemble (D2) de données sur un rapport temporel de relations (GBa, GBi) de synchronisation actives et inactives entre les objets (TO1, TO2, TO3),
pour la représentation sur un écran (22), on fait fonctionner un moyen (23) d'exploitation qui, à l'aide du premier ensemble (D1) de données déterminé et du deuxième ensemble (D2) de données déterminé, représente graphiquement les objets (TO1, TO2, TO3) avec leurs relations (GBa, GBi) de synchronisation actives et/ou inactives,
dans lequel en outre, au moyen d'un moyen (24) d'enregistrement, on installe un premier service (LD1) de lecture sur le premier appareil (1) de commande et un deuxième service (LD2) de lecture sur le deuxième appareil (2) de commande, dans lequel les services (LD1, LD2) de lecture exécutent un suivi de déroulement des objets (TO1, TO2, TO3) dans le premier programme (AW1) d'utilisateur et respectivement des objets (TO1, TO2, TO3) dans le deuxième programme (AW2) d'utilisateur et enregistre ainsi une association dans le temps à des données (Stat) d'état, à des données (Sync) de synchronisation et à des données (Moti) de type de fonctionnement des objets (TO1, TO2, TO3) dans un premier fichier (T1) de déroulement et respectivement dans un deuxième fichier (T1) de déroulement, dans lequel en outre, au moyen du moyen (23) d'exploitation, à l'aide des fichiers (T1, T2) de déroulement enregistrés des appareils (1, 2) de commande, on affiche sur l'écran (22) un tracé (40) de la relation (GBa) de synchronisation active entre deux objets (TO1, TO2, TO3), qui se trouvent sur des appareils (1, 2) de commande différents.

6. Procédé suivant la revendication 5,
dans lequel, par le moyen (23) d'exploitation, on exploite en outre un régleur (24) de décalage temporel pour la représentation sur l'écran (22) et, au moyen du régleur (24) de décalage temporel, un personnel d'entretien peut afficher, pendant un instant respectivement sélectionné, le tracé (40) de la relation (GBa) de synchronisation active sur l'écran (22), et restituer ainsi le tracé des relations (GBa) de synchronisation actives.

7. Procédé suivant l'une des revendications 5 à 6,
dans lequel, par l'outil (21) d'analyse, on recherche sur des variables concrètes, les données des objets (TO1, TO2, TO3) et les données des relations (GBi, GBa) de synchronisation entre les objets (TO1, TO2, TO3) en recherchant à cet égard les sous-données suivantes :
un numéro (ID) d'identification d'un objet (TO1, ..., TO3), un type (T), qui peut prendre les valeurs objet-maître ou objet-esclave, un état (Z), qui indique actif ou inactif,
un type (B) de fonctionnement, qui indique les valeurs de synchronisation de vitesse ou de position,
une liste (L), qui indique le numéro (ID) d'identification des objets maîtres potentiels par rapport à un esclave.

8. Procédé suivant l'une des revendications 5 à 7,
dans lequel, par l'outil (21) d'analyse, on recherche les programmes (AW1, AW2) d'utilisateur sur des fichiers de projet, dans lesquels des relations de synchronisation entre les objets (TO1, TO2, TO3) ont été configurées et fixées, et on détermine, à partir des fichiers de projet, un ensemble de couplages potentiels entre les objets (TO1, TO2, TO3).
